(19)

Europäisches Patentamt

European Patent Office

Office européen des brevets

(11)    **EP 4 601 230 A1**

(12)            **EUROPEAN PATENT APPLICATION**
                published in accordance with Art. 153(4) EPC

(43)  Date of publication:
      **13.08.2025  Bulletin 2025/33**

(21)  Application number: **23867518.5**

(22)  Date of filing: **19.09.2023**

(51)  International Patent Classification (IPC):
      **H04L 5/00** *(2006.01)*

(52)  Cooperative Patent Classification (CPC):
      **H04L 5/00; H04W 72/0457; H04W 72/232**

(86)  International application number:
      **PCT/CN2023/119783**

(87)  International publication number:
      **WO 2024/061231 (28.03.2024 Gazette 2024/13)**

(84)  Designated Contracting States:
      **AL AT BE BG CH CY CZ DE DK EE ES FI FR GB
      GR HR HU IE IS IT LI LT LU LV MC ME MK MT NL
      NO PL PT RO RS SE SI SK SM TR**
      Designated Extension States:
      **BA**
      Designated Validation States:
      **KH MA MD TN**

(30)  Priority:  **19.09.2022  CN 202211147703**

(71)  Applicant: **Apogee Networks, LLC
      Dallas, TX 75201 (US)**

(72)  Inventors:
      • **JIANG, Qi
        Shanghai 201206 (CN)**
      • **SONG, Shulin
        Shanghai 201206 (CN)**
      • **ZHANG, Xiaobo
        Shanghai 201206 (CN)**

(74)  Representative: **Gunzelmann, Rainer
      Wuesthoff & Wuesthoff
      Patentanwälte und Rechtsanwalt PartG mbB
      Schweigerstraße 2
      81541 München (DE)**

(54)    **METHOD AND APPARATUS FOR WIRELESS COMMUNICATION**

(57)    Disclosed in the present application are a method and apparatus for wireless communication. The method comprises: a first node receiving first signaling, the first signaling comprising a first field, the first signaling scheduling a first cell set, and the first field of the first signaling being used for indicating a first BWP in a first cell; and in response to receiving the first signaling, operating a first signal in a BWP of each cell in the first cell set, the BWP being the first BWP for the first cell, candidates of the first cell set comprising a plurality of cell sets, at least one of the plurality of cell sets comprising a plurality of cells, the first cell being a cell in the first cell set, and the operation being receiving and the first BWP being a downlink BWP, or the operation being sending and the first BWP being an uplink BWP. The present application can schedule a plurality of cells and indicate BWP switching by means of one DCI, and thus improves flexibility, reduces signaling overhead, and quickly adapts to changes in environments and scenarios.

FIG. 1

AA   First node
101  Receive first signaling
102  In response to receiving the first signaling, operate a first signal in a BWP of each cell in a first cell set

**EP 4 601 230 A1**

## Description

## Technical Field

The present application relates to a transmission method and apparatus in a wireless communication system, and in particular to, a method and apparatus related to DCI (Downlink Control Information) in a wireless communication system.

## Background Art

In the future, the application scenarios of a wireless communication system will become more and more diversified, and different application scenarios impose different performance requirements for the system. In order to meet the different performance requirements of various application scenarios, it was decided at the 72nd plenary meeting of the 3GPP (3rd Generation Partner Project) RAN (Radio Access Network) to carry out study on the new radio (NR) technology (or 5G). At the 75th plenary meeting of the 3GPP RAN, the WI (Work Item) of the new radio (NR) technology was approved, and the standardization work on NR was initiated.

Currently, the study work on the 5G NR in Release 18 has already been initiated. Multi-cell PUSCH/PDSCH scheduling with a single DCI is one of the Study Items (SIs), among which DCI format design, DCI size, BD/CCE budget (BD: Blind Decoding) (CCE: Control Channel Element), the maximum number of cells scheduling with a single DCI, search space (SS) configuration, HARQ enhancements, and DCI field design (such as BWP indicator (Bandwidth Part Indicator), Frequency Domain Resource Allocation (FDRA), Time Domain Resource Allocation (TDRA), and Downlink Assignment Index (DAI)) are the study contents of multi-cell scheduling.

## Summary of the Invention

The inventor found through study that in wireless communication systems, DCI field design is a key issue.

In response to the above problem, the present application discloses a solution. It should be noted that although the original intention of the present application is to provide a detailed explanation for the transmission scenario of multi-cell PUSCH (Physical Uplink Shared Channel)/PDSCH (Physical Downlink Shared Channel) scheduling with a single DCI, the present application can also be used in the transmission scenario of single-cell PUSCH/PDSCH scheduling with a single DCI. Furthermore, adopting a unified design solution for different scenarios (comprising, but not limited to, multi-cell PUSCH/PDSCH scheduling with a single DCI and single-cell PUSCH/PDSCH scheduling with a single DCI) can also help to reduce hardware complexity and cost. In the case of no conflict, the embodiments and features in the embodiments in any node of the present application may be applied to any other node. In the case of no conflict, the embodiments and features in the embodiments of the present application may be arbitrarily combined with each other.

As one embodiment, the interpretation of the terminology in the present application refers to the definition of the TS36 series of 3GPP standard protocols.

As one embodiment, the interpretation of the terminology in the present application refers to the definition of the TS38 series of 3GPP standard protocols.

As one embodiment, the interpretation of the terminology in the present application refers to the definition of the TS37 series of 3GPP standard protocols.

As one embodiment, the interpretation of the terminology in the present application refers to the definition of the standard protocol of IEEE (Institute of Electrical and Electronics Engineers).

The present application discloses a method in a first node for wireless communication, comprising:

receiving a first signaling, the first signaling comprising a first field, the first signaling scheduling a first cell set, and the first field of the first signaling being used for indicating a first BWP in a first cell; and
in response to sending the first signaling, operating a first signal in a BWP of each cell in the first cell set, and the BWP being the first BWP for the first cell;
wherein candidates of the first cell set comprise a plurality of cell sets, at least one of the plurality of cell sets comprises a plurality of cells, and the first cell is a cell in the first cell set; and the operation is receiving and the first BWP is a downlink BWP, or the operation is sending and the first BWP is an uplink BWP. As one embodiment, the problem to be solved by the present application comprises: calculation of CSI reporting amount.

As one embodiment, the above method indicates BWP switching of a plurality of scheduled cells through the first field in the first signaling, and thus improves flexibility, and reduces signaling overhead.

According to one aspect of the present application, the first field of the first signaling comprises K1 information bits; the operation is receiving and the K1 depends on the number of downlink BWPs in a target cell set, or the operation is sending and the K1 depends on the number of uplink BWPs in the target cell set; and the target cell set is one of the plurality of cell sets.

According to one aspect of the present application, the operation is receiving and the target cell set is a cell set comprising the largest number of downlink BWPs in the plurality of cell sets, or the operation is sending and the target cell set is a cell set comprising the largest number of uplink BWPs in the plurality of cell sets.

According to one aspect of the present application, a value of the first field of the first signaling depends on an index of the first cell and a BWP-Id of the first BWP.

According to one aspect of the present application, the operation is receiving, and all cells in the first cell set comprise Q1 downlink BWPs in total, the Q1 being a positive integer greater than 1, the Q1 BWPs corresponding to Q1 indexes, respectively, and the first field of the first signaling being used for determining an index corresponding to the first BWP from the Q1 indexes; or the operation is sending, and all cells in the first cell set comprise Q1 uplink BWPs in total, the Q1 being a positive integer greater than 1, the Q1 BWPs corresponding to Q1 indexes, respectively, and the first field of the first signaling being used for determining an index corresponding to the first BWP from the Q1 indexes.

According to one aspect of the present application, a value of the first field of the first signaling is equal to a first value, and the index corresponding to the first BWP is equal to a first index; and the operation is receiving and a relationship between the first value and the first index is related to whether the Q1 downlink BWPs comprise an initial downlink BWP, or the operation is sending and a relationship between the first value and the first index is related to whether the Q1 uplink BWPs comprise an initial uplink BWP.

According to one aspect of the present application, the Q1 downlink BWPs are sequentially mapped to the Q1 indexes in a manner of BWP-Id first and cell index second,; or the Q1 uplink BWPs are sequentially mapped to the Q1 indexes in a manner of BWP-Id first and cell index second.

The present application discloses a method in a second node for wireless communication, comprising:

> sending a first signaling, the first signaling comprising a first field, the first signaling scheduling a first cell set, and the first field of the first signaling being used for indicating a first BWP in a first cell; and
> in response to sending the first signaling, executing a first signal in a BWP of each cell in the first cell set, and the BWP being the first BWP for the first cell;
> wherein candidates of the first cell set comprise a plurality of cell sets, at least one of the plurality of cell sets comprises a plurality of cells, and the first cell is a cell in the first cell set; and the execution is sending and the first BWP is a downlink BWP, or the execution is receiving and the first BWP is an uplink BWP.

According to one aspect of the present application, the first field of the first signaling comprises K1 information bits; the execution is receiving and the K1 depends on the number of uplink BWPs in a target cell set, or the execution is sending and the K1 depends on the number of downlink BWPs in the target cell set; and the target cell set is one of the plurality of cell sets.

According to one aspect of the present application, the execution is receiving and the target cell set is a cell set comprising the largest number of uplink BWPs in the plurality of cell sets, or the execution is sending and the target cell set is a cell set comprising the largest number of downlink BWPs in the plurality of cell sets.

According to one aspect of the present application, a value of the first field of the first signaling depends on an index of the first cell and a BWP-Id of the first BWP.

According to one aspect of the present application, the execution is receiving, and all cells in the first cell set comprise Q1 uplink BWPs in total, the Q1 being a positive integer greater than 1, the Q1 BWPs corresponding to Q1 indexes, respectively, and the first field of the first signaling being used for determining an index corresponding to the first BWP from the Q1 indexes; or the execution is sending, and all cells in the first cell set comprise Q1 downlink BWPs in total, the Q1 being a positive integer greater than 1, the Q1 BWPs corresponding to Q1 indexes, respectively, and the first field of the first signaling being used for determining an index corresponding to the first BWP from the Q1 indexes.

According to one aspect of the present application, a value of the first field of the first signaling is equal to a first value, and the index corresponding to the first BWP is equal to a first index; and the execution is receiving and a relationship between the first value and the first index is related to whether the Q1 uplink BWPs comprise an initial uplink BWP, or the execution is sending and a relationship between the first value and the first index is related to whether the Q1 downlink BWPs comprise an initial downlink BWP.

According to one aspect of the present application, the Q1 downlink BWPs are sequentially mapped to the Q1 indexes in a manner of BWP-Id first and cell index second; or the Q1 uplink BWPs are sequentially mapped to the Q1 indexes in a manner of BWP-Id first and cell index second.

The present application discloses a first node for wireless communication, comprising:

> a first receiver receiving a first signaling, the first signaling comprising a first field, the first signaling scheduling a first cell set, and the first field of the first signaling being used for indicating a first BWP in a first cell; and
> a first transceiver, in response to receiving the first signaling, operating a first signal in a BWP of each cell in the first cell set, the BWP being the first BWP for the first cell;
> wherein candidates of the first cell set comprise a plurality of cell sets, at least one of the plurality of cell sets comprises a plurality of cells, and the first cell is a cell in the first cell set; and the operation is receiving and the first BWP is a downlink BWP, or the operation is sending and the first BWP is an uplink BWP.

The present application discloses a second node for wireless communication, comprising:

> a second transmitter, sending a first signaling, the first signaling comprising a first field, the first signaling scheduling a first cell set, and the first field of the first signaling being used for indicating a first BWP in a first cell; and

a second transceiver, in response to sending the first signaling, executing a first signal in a BWP of each cell in the first cell set, and the BWP being the first BWP for the first cell;

wherein candidates of the first cell set comprise a plurality of cell sets, at least one of the plurality of cell sets comprises a plurality of cells, and the first cell is a cell in the first cell set; and the execution is receiving and the first BWP is an uplink BWP, or the execution is sending and the first BWP is a downlink BWP.

As one embodiment, compared with the traditional method, the present application has the following advantages of:

- improving flexibility; and
- reducing redundant overhead of DCI.

**Brief Description of the Drawings**

By reading the detailed description of the non-limiting embodiments in the following drawings, other features, purposes and advantages of the present application will become more obvious:

FIG. 1 shows a flowchart of a first signaling, a first cell set and a first signal according to one embodiment of the present application;

FIG. 2 shows a schematic diagram of a network architecture according to one embodiment of the present application;

FIG. 3 shows a schematic diagram of an embodiment of a wireless protocol architecture of a user plane and a control plane according to one embodiment of the present application;

FIG. 4 shows a schematic diagram of a first communication device and a second communication device according to one embodiment of the present application;

FIG. 5 shows a flowchart of transmission according to one embodiment of the present application;

FIG. 6 shows a flowchart of transmission according to another embodiment of the present application;

FIG. 7 shows a schematic diagram showing that the number of bits of a first field depends on the number of BWPs in a target cell set according to one embodiment of the present application;

FIG. 8 shows a schematic diagram of a target cell set being a cell set comprising the largest number of BWPs according to one embodiment of the present application;

FIG. 9 shows a schematic diagram showing that a value of a first field depends on an index of a first cell and a BWP-Id of a first BWP according to one embodiment of the present application;

FIG. 10 shows a schematic diagram of a first field being used for determining an index corresponding to a first BWP according to one embodiment of the present application;

FIG. 11 shows a schematic diagram showing that a relationship between a first value and a first index is related to an initial BWP according to one embodiment of the present application;

FIG. 12 shows a schematic diagram of mapping of Q1 BWPs to Q1 indexes according to one embodiment of the present application;

FIG. 13 shows a structural block diagram of a processing apparatus used in a first node device according to one embodiment of the present application; and

FIG. 14 shows a structural block diagram of a processing apparatus used in a second node device according to one embodiment of the present application.

**Detailed Description of Embodiments**

The technical solution of the present application will be further described in detail below in conjunction with drawings. It should be noted that in the case of no conflict, the embodiments and features in the embodiments of the present application may be arbitrarily combined with each other.

**Embodiment 1**

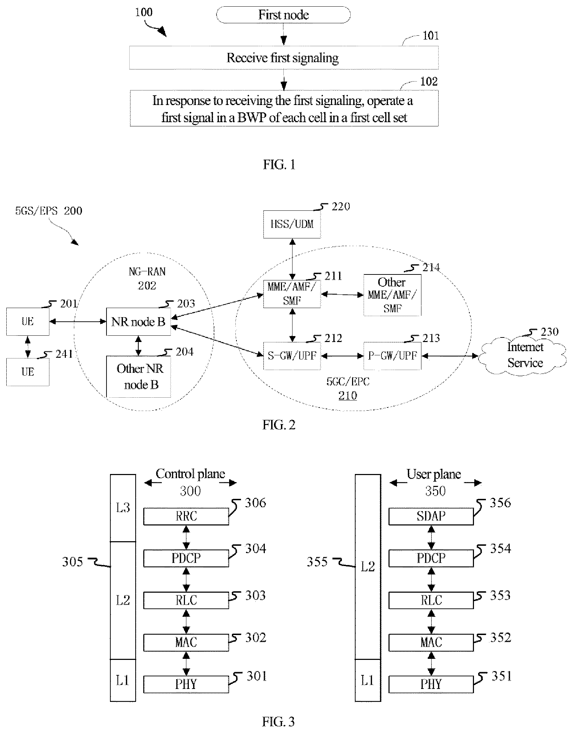

Embodiment 1 illustrates a flowchart of a first signaling, a first cell set and a first signal according to one embodiment of the present application, as shown in FIG. 1. In 100 shown in FIG. 1, each box represents one step. In particular, the order of the steps in the box does not represent a specific time sequence among the individual steps.

In Embodiment 1, the first node in the present application receives a first signaling in step 101, the first signaling comprises a first field, the first signaling schedules a first cell set, and the first field of the first signaling is used for indicating a first BWP in a first cell; in step 102, in response to receiving the first signaling, a first signal is operated in a BWP of each cell in the first cell set, and the BWP is the first BWP for the first cell, wherein candidates of the first cell set comprise a plurality of cell sets, at least one of the plurality of cell sets comprises a plurality of cells, and the first cell is a cell in the first cell set; and the operation is receiving and the first BWP is a downlink BWP, or the operation is sending and the first BWP is an uplink BWP.

As one embodiment, a physical layer channel occupied by the first signaling comprises a PDCCH (Physical Downlink Control Channel).

As one embodiment, the first signaling comprises a MAC CE (Medium Access Control) (Control Element).

As one embodiment, the first signaling comprises a physical layer dynamic signaling.

As one embodiment, the first signaling is DCI.

As one embodiment, the first signaling is cell common.

As one embodiment, the first signaling is cell specific.

As one embodiment, the first signaling is UE group common.

As one embodiment, the first signaling is UE group specific.

As one embodiment, the first signaling is UE specific.

As one embodiment, the operation is receiving, and the first signaling is a downlink grant (DL Grant).

As one embodiment, the operation is sending, and the first signaling is an uplink grant (UL Grant).

As one embodiment, the operation is receiving and the first signaling schedules a PDSCH on a first cell set.

As one embodiment, the operation is sending and the first signaling schedules a PUSCH on a first cell set.

As one embodiment, the first signaling comprises only a first field.

As one embodiment, the first signaling comprises at least one field outside a first field.

As one embodiment, the first signaling comprises a plurality of fields.

As one embodiment, the first field of the first signaling comprises at least one DCI field.

As one embodiment, the first field of the first signaling is one DCI field.

As one embodiment, the first field of the first signaling comprises a plurality of DCI fields.

As one embodiment, the first field of the first signaling comprises a Bandwidth Part Indicator field.

As one embodiment, the first field of the first signaling comprises all or part of information in a Bandwidth Part Indicator.

As one embodiment, the first field of the first signaling is a Bandwidth Part Indicator field.

As one embodiment, the first field of the first signaling is only used for indicating one downlink BWP or one uplink BWP.

As one embodiment, the first cell set comprises one cell.

As one embodiment, the first cell set comprises only the first cell.

As one embodiment, the first cell set comprises at least one cell.

As one embodiment, the first cell set comprises a plurality of cells.

As one embodiment, the first cell set comprises N1 cells, the N1 being a positive integer greater than 1, and the N1 cells comprising the first cell.

As one embodiment, candidates of the first cell set comprise only the first cell set.

As one embodiment, candidates of the first cell set comprise a plurality of cell sets, at least one of the plurality of cell sets comprises a plurality of cells, and the first cell is a cell in the first cell set.

As one embodiment, the first cell is allocated one uplink BWP.

As one embodiment, the first cell is allocated at least one uplink BWP.

As one embodiment, the first cell is allocated a plurality of uplink BWPs.

As one embodiment, the first cell is allocated a plurality of uplink BWPs, and the maximum number of uplink BWPs allocated to the first cell is 4.

As one embodiment, the first cell is allocated an initial uplink BWP.

As one embodiment, the first cell is allocated one downlink BWP.

As one embodiment, the first cell is allocated at least one downlink BWP.

As one embodiment, the first cell is allocated a plurality of downlink BWPs.

As one embodiment, the first cell is allocated a plurality of downlink BWPs, and the maximum number of downlink BWPs allocated to the first cell is 4.

As one embodiment, the first cell is allocated an initial downlink BWP.

As one embodiment, the first cell comprises the first BWP, and the first BWP is one uplink BWP or one downlink BWP.

As one embodiment, the cell in the present application comprises a service cell.

As one embodiment, the cell in the present application comprises a physical cell.

As one embodiment, the cell in the present application comprises a CC (Component Carrier).

As one embodiment, the cell in the present application comprises a primary cell (PCell).

As one embodiment, the cell in the present application comprises a secondary cell (SCell).

As one embodiment, the cell in the present application comprises a special cell (SpCell).

As one embodiment, the cell in the present application is a service cell of the first node.

As one embodiment, the cells in the present application are allocated an SCellIndex or a ServCellIndex, respectively.

As one embodiment, the cell index in the present application comprises an SCellIndex.

As one embodiment, the cell index in the present application comprises a ServCellIndex.

As one embodiment, the cell index in the present application comprises a ServCellIdentity.

As one embodiment, the cells in the present application belong to the same cell group.

As one embodiment, the cells in the present application all belong to an MCG (Master Cell Group) or an SCG (Secondary Cell Group).

As one embodiment, the cells in the present application belong to the same PUCCH (Physical Uplink Control Channel) group.

As one embodiment, one PUCCH group comprises a group of cells, and a PUCCH signaling of the group of cells is associated with a PUCCH of an SpCell, or associated with a PUCCH of a PUCCH SCell; and one PUCCH SCell is an SCell configured with a PUCCH.

As one embodiment, one PUCCH group comprises a group of cells, and a PUCCH signaling of the group of cells is associated with a PUCCH of the same cell.

As one embodiment, the cells in the present application have the same numerology.

As one embodiment, the cells in the present application have the same subcarrier spacing configuration.

As one embodiment, the first signaling is used for indicating the first cell set.

As one embodiment, the first signaling explicitly indicates the first cell set.

As one embodiment, the first signaling implicitly indicates the first cell set.

As one embodiment, the first signaling directly indicates the first cell set.

As one embodiment, the first signaling indirectly indicates the first cell set.

As one embodiment, the first field of the first signaling is used for indicating the first BWP in the first cell.

As one embodiment, the first BWP comprises one RB (Resoure Block).

As one embodiment, the first BWP comprises at least one RB.

As one embodiment, the first BWP comprises a plurality of RBs.

As one embodiment, the first BWP comprises a plurality of RBs that are continuous in a frequency domain.

As one embodiment, the first BWP is a plurality of RBs that are continuous in a frequency domain.

As one embodiment, the first BWP comprises a plurality of RBs that are discontinuous in a frequency domain.

Typically, the first signaling comprises a second field, and the second field of the first signaling is used for indicating the first cell set.

As one embodiment, the second field of the first signaling comprises at least one DCI field.

As one embodiment, the second field of the first signaling is one DCI field.

As one embodiment, the second field of the first signaling comprises a plurality of DCI fields.

As one embodiment, the second field of the first signaling is used for indicating the first cell set from M1 candidate cell sets, candidates of the first cell set comprise the M1 candidate cell sets, and the M1 is a positive integer greater than 1.

As one sub-embodiment of this embodiment, a value of M1 is used for determining the maximum number of information bits occupied by the second field of the first signaling.

As one sub-embodiment of this embodiment, the maximum number of information bits occupied by the second field of the first signaling is equal to

$$\lceil log_2(M1) \rceil .$$

As one sub-embodiment of this embodiment, the maximum number of information bits occupied by the second field of the first signaling is equal to

$$\lfloor log_2(M1) \rfloor + 1 .$$

As one sub-embodiment of this embodiment, the plurality of cell sets correspond to the M1 candidate cell sets.

As one embodiment, the second field of the first signaling comprises a CIF (Carrier Indicator Field).

As one embodiment, the second field of the first signaling is a CIF.

As one embodiment, the first signaling comprises only one field for indicating the first cell set, and the field corresponds to the second field of the first signaling.

Typically, the first signaling comprises L1 third fields, the L1 third fields of the first signaling are used for indicating L1 cells comprised in the first cell set, respectively, and the L1 is a positive integer.

As one embodiment, the third field of the first signaling comprises at least one DCI field.

As one embodiment, the third field of the first signaling is one DCI field.

As one embodiment, the third field of the first signaling comprises a plurality of DCI fields.

As one embodiment, the L1 third fields of the first signaling comprise L1 CIFs, respectively.

As one embodiment, the L1 third fields of the first signaling are L1 CIFs, respectively.

As one embodiment, the meaning of the above phrase "operating a first signal in a BWP of each cell in the first cell set" comprises: the operation is receiving, and a first signal is received in a downlink BWP of each cell in the first cell set.

As one sub-embodiment of this embodiment, the first cell set comprises L1 cells, the L1 is a positive integer, the L1 cells comprise L1 downlink BWPs, respectively, the first node receives L1 sub-signals in the L1 downlink BWPs, and the L1 sub-signals constitute the first signal.

As one subsidiary embodiment of this sub-embodiment, the L1 is a positive integer.

As one subsidiary embodiment of this sub-embodiment, the L1 is equal to 1.

As one subsidiary embodiment of this sub-embodiment, the L1 is greater than 1.

As one subsidiary embodiment of this sub-embodiment, the L1 downlink BWPs comprise the first BWP.

As one sub-embodiment of this embodiment, the first cell set comprises L1 cells, the L1 is a positive integer, any one of the L1 cells comprises only one activated downlink BWP, and the first node receives the first signal only in an activated downlink BWP comprised in the L1 cells.

As one embodiment, the operation is receiving, and a physical layer channel occupied by the first signal comprises a PDSCH.

As one embodiment, the operation is receiving, and a transmission channel corresponding to the first signal comprises a DL-SCH (Downlink Shared Channel).

As one embodiment, the operation is receiving, a physical layer channel occupied by the first signal comprises L1 PDSCHs, and the L1 PDSCHs are transmitted in L1 cells comprised in the first cell set, respectively.

As one embodiment, the meaning of the above phrase "operating a first signal in a BWP of each cell in the first cell set" comprises: the operation is sending, and a first signal is sent in an uplink BWP of each cell in the first cell set.

As one sub-embodiment of this embodiment, the first cell set comprises L1 cells, the L1 is a positive integer, the L1 cells comprise L1 uplink BWPs, respectively, the first node sends L1 sub-signals in the L1 uplink BWPs, and the L1 sub-signals constitute the first signal.

As one subsidiary embodiment of this sub-embodiment, the L1 is a positive integer.

As one subsidiary embodiment of this sub-embodiment, the L1 is equal to 1.

As one subsidiary embodiment of this sub-embodiment, the L1 is greater than 1.

As one subsidiary embodiment of this sub-embodiment, the L1 uplink BWPs comprise the first BWP.

As one sub-embodiment of this embodiment, the first cell set comprises L1 cells, the L1 is a positive integer, any one of the L1 cells comprises only one activated uplink BWP, and the first node sends the first signal only in an activated uplink BWP comprised in the L1 cells.

As one embodiment, the operation is sending, and a physical layer channel occupied by the first signal comprises a PUSCH.

As one embodiment, the operation is sending, and a transmission channel corresponding to the first signal comprises a UL-SCH (Uplink Shared Channel).

As one embodiment, the operation is sending, and a physical layer channel occupied by the first signal comprises L1 PUSCHs, and the L1 PUSCHs are transmitted in L1 cells comprised in the first cell set, respectively.

As one embodiment, the first signal is generated by one TB (Transport Block).

As one embodiment, the first signal is generated by one bit block.

As one embodiment, the first signal is generated by L1 TBs.

As one embodiment, the first signal is generated by L1 bit blocks.

## Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and a future 5G system. The network architecture 200 of the LTE, the LTE-A and the future 5G system is referred to as an EPS (Evolved Packet System) 200. The 5G NR or the network architecture 200 of the LTE may be referred to as a 5GS (5G System)/EPS (Evolved Packet System) 200 or some other suitable terminologies. The 5GS/EPS 200 may comprise one or more pieces of UE (User Equipment) 201, one UE241 communicating with the UE201 via a sidelink, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS200 may be interconnected with other access networks, but these entities/interfaces are not shown for simplicity. As shown in FIG. 2, the 5GS/EPS200 provides packet switching services, but those skilled in the art will readily appreciate that various concepts presented throughout the present application may be extended to networks providing circuit switching services. The NG-RAN202 comprises an NR (New Radio) node B (gNB) 203 and other gNBs 204. The gNB203 provides protocol termination of user and control planes towards the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmission Reception Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises Internet protocol services corresponding to operators, which may specifically comprise Internet, Intranet, an IMS (IP Multimedia Subsystem), and packet switching services.

As one embodiment, the first node in the present application comprises the UE201.

As one embodiment, the first node in the present application comprises the UE241.

As one embodiment, the second node in the present application comprises the gNB203.

As one embodiment, the UE201 supports a plurality of carriers being scheduled with the same one DCI.

As one embodiment, the UE201 supports a plurality of service cells being scheduled with the same one DCI.

As one embodiment, the UE201 supports cross-carrier scheduling.

As one embodiment, the NR node B corresponds to the second node in the present application.

As one embodiment, the NR node B supports a plurality of carriers being scheduled with the same one DCI.

As one embodiment, the NR node B supports a plurality of service cells being scheduled with the same one DCI.

As one embodiment, the NR node B supports cross-carrier scheduling.

As one embodiment, the NR node B is one base station.

As one embodiment, the NR node B is one cell.

As one embodiment, the NR node B comprises a plurality of cells.

As one embodiment, the NR node B is used for determining transmission on a plurality of service cells.

## Embodiment 3

Embodiment 3 illustrates a schematic diagram of an embodiment of a wireless protocol architecture for a user plane and a control plane according to one embodiment of the present application, as shown in FIG. 3.

Embodiment 3 shows a schematic diagram of an embodiment of a wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, gNB, or RSU in V2X) and a second communication node device (gNB, UE, or RSU in V2X), or between two pieces of UE using three layers: Layer 1, Layer 2, and Layer 3. The Layer 1 (L1 layer) is the lowest layer and implements various signal processing functions for a PHY (physical layer). The L1 layer will be referred to as the PHY301 herein. The Layer 2 (L2 layer) 305 is above the PHY301 and is responsible for the link between the first communication node device and the second communication node device, or between the two pieces of UE. The L2 layer 305 comprises an MAC (Medium Access Control) sublayer 302, an RLC (Radio Link Control) sublayer 303, and a PDCP (Packet Data Convergence Protocol) sublayer 304, and these sublayers terminate at the second communication node device. The PDCP sublayer 304 provides multiplexing between different radio bearers and logical channels. The PDCP sublayer 304 also provides security by encrypting data packets, and provides handover support of the first communication node device between the second communication node devices. The RLC sublayer 303 provides segmentation and reassembly of upper-layer data packets, retransmission of lost data packets, and reordering of the data packets to compensate for out-of-order reception due to a HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. The RRC (Radio Resource Control) sublayer 306 in the layer 3 (L3 layer) in the control plane 300 is responsible for obtaining radio resources (i.e., radio bearers) and configuring a lower layer using an RRC signaling between the second communication node device and the first communication node device. The radio protocol architecture for the user plane 350 comprises a Layer 1 (L1 layer) and a Layer 2 (L2 layer). The radio protocol architecture for the first communication node device and the second communication node device in the user plane 350 is substantially the same as the corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for the upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services. Although not shown, the first communication node device may have several upper layers above the L2 layer 355, comprising a network layer (e.g., an IP layer) terminating at the P-GW on a network side and an application layer terminating at the other end of a connection (e.g., a remote UE and a server, etc.).

As one embodiment, the wireless protocol architecture in FIG. 3 is applicable to the first node in the present application.

As one embodiment, the wireless protocol architecture in FIG. 3 is applicable to the second node in the present application.

As one embodiment, the first signaling is generated in the PHY301, or the PHY351.

As one embodiment, the first signaling is generated in the MAC sublayer 302.

As one embodiment, the first signal is generated in the PHY301, or the PHY351.

As one embodiment, the first signal is generated in the MAC302 or MAC352.

As one embodiment, the first signal is generated in the RRC306.

**Embodiment 4**

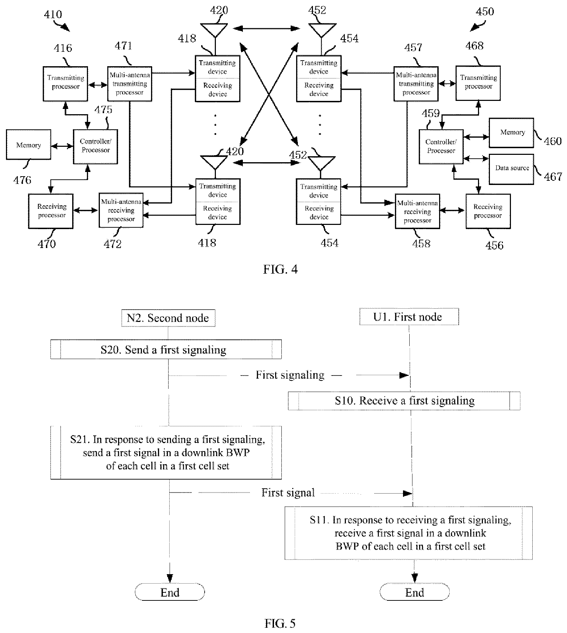

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper-layer data packets from the core network are provided to the controller/processor 475. The controller/processor 475 implements the functionality of the L2 layer. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signaling to the second communications device 450. The transmitting processor 416 and the multi-antenna transmitting processor 471 implement various signal processing functions for the L1 layer (i.e., the physical layer). The transmitting processor 416 implements coding and interleaving to facilitate forward error correction (FEC) at the second communication device 450, as well as constellation mapping based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more parallel streams. The transmitting processor 416 then maps each parallel stream to a subcarrier, multiplexes the modulated symbols with a reference signal (e.g., pilot frequency) in a time domain and/or a frequency domain, and then uses an inverse fast Fourier transform (IFFT) to generate a physical channel carrying a time domain multi-carrier symbol stream. The multi-antenna transmitting processor 471 then performs a sending analog precoding/beamforming operation on the time domain multi-carrier symbol stream. Each transmitting device 418 converts a baseband multi-carrier symbol stream provided by the multi-antenna transmitting processor 471 into a radio frequency stream, and then provides the radio frequency steam to different antennas 420.

In transmission from the first communication device 410 to the second communication device 450, at the second communication device 450, each receiving device 454 receives a signal through corresponding antenna 452 thereof. Each receiving device 454 recovers the information modulated onto the radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions for the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from a time domain to a frequency domain. In the frequency domain, a data signal of the physical layer and a reference signal are demultiplexed by the receiving processor 456, wherein a reference signal is used for channel estimation, and a data signal is recovered into any parallel stream destined for the second communication device 450 after multi-antenna detection in the multi-antenna receiving processor 458. The symbols on each parallel stream are demodulated and recovered in the receiving processor 456, and soft decisions are generated. The receiving processor 456 then decodes and deinterleaves the soft decisions to recover upper layer data and control signals transmitted by the first communication device 410 on the physical channel. The upper layer data and the control signals are then provided to the controller/processor 459. The controller/processor 459 implements the functions of the L2 layer. The controller/processor 459 may be associated with the memory 460 storing program codes and data. The memory 460 may be referred to as a computer-readable medium. In a DL, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to the L3 for L3 processing. The controller/processor 459 is also responsible for error detection using an acknowledgement (ACK) and/or a negative acknowledgement (NACK) protocol to support HARQ operations.

In transmission from the second communication device 450 to the first communication device 410, at the second communication device 450, the data source 467 is used for providing the upper-layer data packets to the controller/processor 459. The data source 467 represents all protocol layers above the L2 layer. Similar to the transmission function at the first communication device 410 described in a DL, the controller/processor 459 implements header compression, encryption, packet segmentation and reordering, and multiplexing between logical and transport channels based on the wireless resource allocation of the first communication device 410, and implements the functions of the L2 layer for the user plane and the control plane. The controller/processor 459 is also responsible for HARQ operations, retransmission of lost packets, and signaling to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. The transmitting processor 468 then modulates the generated parallel stream into a multi-carrier/single-carrier symbol stream, which undergoes analog precoding/beamforming operations in the multi-antenna transmitting processor 457 and is then provided to different antennas 452 via the transmitting device 454. Each transmitting device 454 first converts the baseband symbol stream provided by the multi-antenna transmitting processor 457 into a radio frequency symbol stream, and then provides the radio frequency symbol stream to the antenna 452.

In transmission from the second communication device 450 to the first communication device 410, the function at the first communication device 410 is similar to the receiving function at the second communication device 450 described in transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the function of the L1 layer. The controller/processor 475 implements the functions of the L2 layer. The controller/processor 475 may be associated with the memory 476 storing program codes and data. The memory 476 may be referred to as a computer-readable medium. The controller/processor 475 provides demultiplexing between transport and logical channels, packet reassembly, decryption, header decompression, and control signal processing to recover upper-layer data packets from the second communications device 450. The upper-layer data packets from the controller/processor 475 may be provided to the core network. The controller/processor 475 is also responsible for error detection using an ACK and/or a NACK protocol to support HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least: receives a first signaling; and in response to receiving the first signaling, operates a first signal in a BWP of each cell in the first cell set; the first signaling comprises a first field, the first signaling schedules the first cell set, and the first field of the first signaling is used for indicating a first BWP in a first cell; the BWP is the first BWP for the first cell; candidates of the first cell set comprise a plurality of cell sets, at least one of the plurality of cell sets comprises a plurality of cells, and the first cell is a cell in the first cell set; and the operation is receiving and the first BWP is a downlink BWP, or the operation is sending and the first BWP is an uplink BWP.

As one embodiment, the second communication device 450 comprises: a memory storing a computer-readable instruction program, the computer-readable instruction program generating an action when operated by at least one processor, and the action comprising: receiving a first signaling; and in response to receiving the first signaling, operating a first signal in a BWP of each cell in the first cell set.

As one embodiment, the first communication device 410 comprises: at least one processor and at least one memory, the at least one memory comprising a computer program code; and the at least one memory and the computer program code are configured to be used with the at least one processor. The first communication device 410 apparatus at least: sends a first signaling; and in response to sending the first signaling, executes a first signal in a BWP of each cell in the first cell set; the first signaling comprises a first field, the first signaling schedules the first cell set, and the first field of the first signaling is used for indicating a first BWP in a first cell; the BWP is the first BWP for the first cell; candidates of the first cell set comprise a plurality of cell sets, at least one of the plurality of cell sets comprises a plurality of cells, and the first cell is a cell in the first cell set; and the execution is sending and the first BWP is a downlink BWP, or the execution is receiving and the first BWP is an uplink BWP.

As one embodiment, the first communication device 410 comprises: a memory storing a computer-readable instruction program, the computer-readable instruction program generating an action when executed by at least one processor, and the action comprising: sending a first signaling; and in response to sending the first signaling, executing a first signal in a BWP of each cell in the first cell set.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the receiving device 454, the receiving processor 456, the multi-antenna receiving processor 458, the controller/processor 459, the memory 460, and the data source 467} is used for receiving the first signal in the present application; and at least one of {the antenna 420, the transmitting device 418, the transmitting processor 416, the multi-antenna transmitting processor 471, the controller/processor 475, and the memory 476} is used for sending the first signal in the present application.

As one embodiment, at least one of {the antenna 452, the receiving device 454, the receiving processor 456, the multi-antenna receiving processor 458, the controller/processor 459, the memory 460, and the data source 467} is used for sending the first signal in the present application; and at least one of {the antenna 420, the transmitting device 418, the transmitting processor 416, the multi-antenna transmitting processor 471, the controller/processor 475, and the memory 476} is used for receiving the first signal in the present application.

### Embodiment 5

Embodiment 5 illustrates a flowchart of transmission according to one embodiment of the present application, as shown in FIG. 5. In FIG. 5, a first node U1 and a second node N2 are two communication nodes transmitted through an air interface, respectively.

For **the first node U1,** in step S10, a first signaling is received; and in step S11, in response to receiving the first signaling, a first signal is received in a downlink BWP of each cell in the first cell set.

For **the second node N2,** in step S20, a first signaling is sent; and in step S21, in response to sending the first signaling, a first signal is sent in a downlink BWP of each cell in the first cell set.

In Embodiment 5, the first signaling comprises a first field, the first signaling schedules a first cell set, and the first field of the first signaling is used for indicating a first BWP in a first cell; the BWP is the first BWP for the first cell; and candidates of the first cell set comprise a plurality of cell sets, at least one of the plurality of cell sets comprises a plurality of cells, and the first cell is a cell in the first cell set.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, an air interface between the second node N2 and the first node U1 comprises a wireless interface between a relay node device and user equipment.

As one embodiment, an air interface between the second node N2 and the first node U1 comprises a wireless interface between pieces of user equipment.

As one embodiment, the second node N2 is a service cell maintenance base station of the first node U1.

As one embodiment, the first signaling is used by the first node U1 to schedule a first signal.

As one embodiment, the first node receives a first signal in a downlink BWP of each cell in the first cell set.

As one sub-embodiment of this embodiment, the first cell set comprises L1 cells, the L1 is a positive integer, the L1 cells comprise L1 downlink BWPs, respectively, the first node receives L1 sub-signals in the L1 downlink BWPs, and the L1 sub-signals constitute the first signal.

As one subsidiary embodiment of this sub-embodiment, the L1 is a positive integer.

As one subsidiary embodiment of this sub-embodiment, the L1 is equal to 1.

As one subsidiary embodiment of this sub-embodiment, the L1 is greater than 1.

As one subsidiary embodiment of this sub-embodiment, the L1 downlink BWPs comprise the first BWP.

As one sub-embodiment of this embodiment, the first cell set comprises L1 cells, the L1 is a positive integer, any one of the L1 cells comprises only one activated downlink BWP, and the first node receives the first signal only in an activated downlink BWP comprised in the L1 cells.

As one sub-embodiment of this embodiment, a physical layer channel occupied by the first signal comprises a PDSCH.

As one sub-embodiment of this embodiment, a transmission channel corresponding to the first signal comprises a DL-SCH.

As one sub-embodiment of this embodiment, a physical layer channel occupied by the first signal comprises L1 PDSCHs, and the L1 PDSCHs are transmitted in L1 cells comprised in the first cell set, respectively.

As one embodiment, the second node sends a first signal in a downlink BWP of each cell in the first cell set.

As one sub-embodiment of this embodiment, the first cell set comprises L1 cells, the L1 is a positive integer, the L1 cells comprise L1 downlink BWPs, respectively, the second node sends L1 sub-signals in the L1 downlink BWPs, and the L1 sub-signals constitute the first signal.

As one subsidiary embodiment of this sub-embodiment, the L1 is a positive integer.

As one subsidiary embodiment of this sub-embodiment, the L1 is equal to 1.

As one subsidiary embodiment of this sub-embodiment, the L1 is greater than 1.

As one subsidiary embodiment of this sub-embodiment, the L1 downlink BWPs comprise the first BWP.

As one sub-embodiment of this embodiment, the first cell set comprises L1 cells, the L1 is a positive integer, any one of the L1 cells comprises only one activated downlink BWP, and the first node sends the first signal only in an activated downlink BWP comprised in the L1 cells.

As one sub-embodiment of this embodiment, a physical layer channel occupied by the first signal comprises a PDSCH.

As one sub-embodiment of this embodiment, a transmission channel corresponding to the first signal comprises a DL-SCH.

As one sub-embodiment of this embodiment, a physical layer channel occupied by the first signal comprises L1 PDSCHs, and the L1 PDSCHs are transmitted in L1 cells comprised in the first cell set, respectively.

**Embodiment 6**

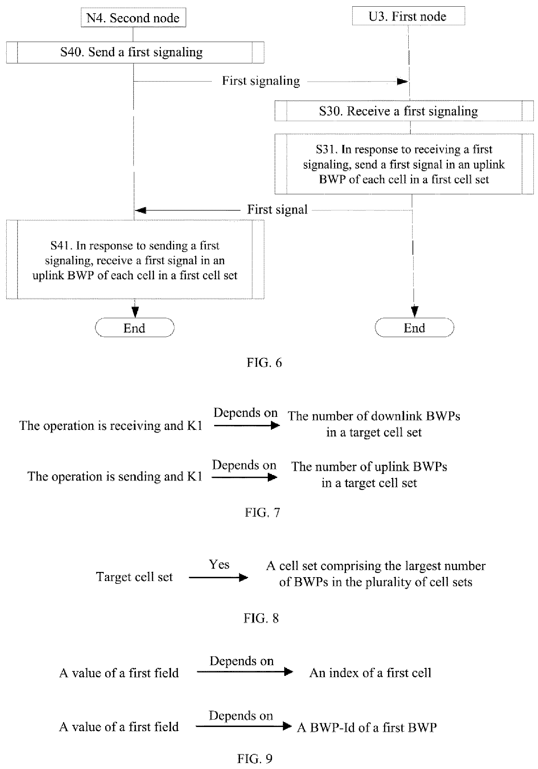

Embodiment 6 illustrates a flowchart of transmission according to another embodiment of the present application, as shown in FIG. 6. In FIG. 6, a first node U3 and a second node N4 are two communication nodes transmitted through an air interface, respectively.

For **the first node U3,** in step S30, a first signaling is received; and in step S31, in response to receiving the first signaling, a first signal is sent in an uplink BWP of each cell in the first cell set.

For **the second node N4,** in step S40, a first signaling is sent; and in step S41, in response to sending the first signaling, a first signal is received in an uplink BWP of each cell in the first cell set.

In Embodiment 6, the first signaling comprises a first field, the first signaling schedules a first cell set, and the first field of the first signaling is used for indicating a first BWP in a first cell; the BWP is the first BWP for the first cell; and candidates of the first cell set comprise a plurality of cell sets, at least one of the plurality of cell sets comprises a plurality of cells, and the first cell is a cell in the first cell set.

As one embodiment, the first node U3 is the first node in the present application.

As one embodiment, the second node N4 is the second node in the present application.

As one embodiment, an air interface between the second node N4 and the first node U3 comprises a wireless interface between a base station device and user equipment.

As one embodiment, an air interface between the second node N4 and the first node U3 comprises a wireless interface between a relay node device and user equipment.

As one embodiment, an air interface between the second node N4 and the first node U3 comprises a wireless interface between pieces of user equipment.

As one embodiment, the second node N4 is a service cell maintenance base station of the first node U3.

As one embodiment, the first signaling is used by the first node U3 to schedule a first signal.

As one embodiment, the first node sends a first signal in an uplink BWP of each cell in the first cell set.

As one sub-embodiment of this embodiment, the first cell set comprises L1 cells, the L1 is a positive integer, the L1 cells comprise L1 uplink BWPs, respectively, the first node sends L1 sub-signals in the L1 uplink BWPs, and the L1 sub-signals constitute the first signal.

As one subsidiary embodiment of this sub-embodiment, the L1 is a positive integer.

As one subsidiary embodiment of this sub-embodiment, the L1 is equal to 1.

As one subsidiary embodiment of this sub-embodiment, the L1 is greater than 1.

As one subsidiary embodiment of this sub-embodiment, the L1 uplink BWPs comprise the first BWP.

As one sub-embodiment of this embodiment, the first cell set comprises L1 cells, the L1 is a positive integer, any one of the L1 cells comprises only one activated uplink BWP, and the first node sends the first signal only in an activated uplink BWP comprised in the L1 cells.

As one embodiment, a physical layer channel occupied by the first signal comprises a PUSCH.

As one embodiment, a transmission channel corresponding to the first signal comprises a UL-SCH.

As one embodiment, a physical layer channel occupied by the first signal comprises L1 PUSCHs, and the L1 PUSCHs are transmitted in L1 cells comprised in the first cell set, respectively.

As one embodiment, the second node receives a first signal in an uplink BWP of each cell in the first cell set.

As one sub-embodiment of this embodiment, the first cell set comprises L1 cells, the L1 is a positive integer, the L1 cells comprise L1 uplink BWPs, respectively, and the second node receives L1 sub-signals in the L1 uplink BWPs, and the L1 sub-signals constitute the first signal.

As one subsidiary embodiment of this sub-embodiment, the L1 is a positive integer.

As one subsidiary embodiment of this sub-embodiment, the L1 is equal to 1.

As one subsidiary embodiment of this sub-embodiment, the L1 is greater than 1.

As one subsidiary embodiment of this sub-embodiment, the L1 uplink BWPs comprise the first BWP.

As one sub-embodiment of this embodiment, the first cell set comprises L1 cells, the L1 is a positive integer, any one of the L1 cells comprises only one activated uplink BWP, and the first node receives the first signal only in an activated uplink BWP comprised in the L1 cells.

As one embodiment, a physical layer channel occupied by the first signal comprises a PUSCH.

As one embodiment, a transmission channel corresponding to the first signal comprises a UL-SCH.

As one embodiment, a physical layer channel occupied by the first signal comprises L1 PUSCHs, and the L1 PUSCHs are transmitted in L1 cells comprised in the first cell set, respectively.

**Embodiment 7**

Embodiment 7 illustrates a schematic diagram showing that the number of bits of a first field depends on the number of BWPs in a target cell set according to one embodiment of the present application, as shown in FIG. 7.

In Embodiment 7, the first field of the first signaling comprises K1 information bits; the operation is receiving and the K1 depends on the number of downlink BWPs in a target cell set, or the operation is sending and the K1 depends on the number of uplink BWPs in a target cell set; and the target cell set is one of the plurality of cell sets.

As one embodiment, the K1 is a real number.

As one embodiment, the K1 is a non-negative number.

As one embodiment, the K1 is a positive integer.

As one embodiment, the K1 is equal to 1.

As one embodiment, the K1 is greater than 1.

As one embodiment, the target cell set comprises one cell.

As one embodiment, the target cell set comprises at least one cell.

As one embodiment, the target cell set comprises a plurality of cells.

As one embodiment, the target cell set comprises only the first cell.

As one embodiment, the target cell set comprises at least one cell outside the first cell.

As one embodiment, the meaning of the number of downlink BWPs in the target cell set comprises: the total number of downlink BWPs comprised in all cells comprised in the target cell set.

As one embodiment, the meaning of the number of uplink BWPs in the target cell set comprises: the total number of uplink BWPs comprised in all cells comprised in the target cell set.

As one embodiment, the operation is receiving, and the K1 increases as the number of downlink BWPs in the target cell set increases; or the K1 decreases as the number of downlink BWPs in the target cell set decreases.

As one embodiment, the operation is receiving, the number of downlink BWPs in the target cell set is equal to $N_{BWP}^{DL}$, and the K1 is equal to $\lceil log_2(N_{BWP}^{DL}) \rceil$.

As one embodiment, the operation is sending, and the number of uplink BWPs in the target cell set is equal to $N_{BWP}^{UL}$, and the K1 is equal to $\lceil log_2(N_{BWP}^{UL}) \rceil$.

As one embodiment, the operation is receiving, the number of downlink BWPs in the target cell set is equal to $N_{BWP}^{DL}$, and the K1 is equal to $\lfloor log_2(N_{BWP}^{DL}) \rfloor + 1$.

As one embodiment, the operation is sending, and the number of uplink BWPs in the target cell set is equal to $N_{BWP}^{UL}$, and the K1 is equal to $\lfloor log_2(N_{BWP}^{UL}) \rfloor + 1$.

**Embodiment 8**

Embodiment 8 illustrates a schematic diagram of a target cell set being a cell set comprising the largest number of BWPs according to one embodiment of the present application, as shown in FIG. 8.

In Embodiment 8, the operation is receiving and the target cell set is a cell set comprising the largest number of downlink BWPs in the plurality of cell sets, or the operation is sending and the target cell set is a cell set comprising the largest number of uplink BWPs in the plurality of cell sets.

As one embodiment, each of the plurality of cell sets comprises a different number of downlink BWPs.

As one embodiment, there are two of the plurality of cell sets comprising the same number of downlink BWPs.

As one embodiment, there are multiple of the plurality of cell sets comprising the same number of downlink BWPs.

As one embodiment, the operation is receiving and the target cell set is a cell set comprising the largest number of downlink BWPs in the plurality of cell sets.

As one sub-embodiment of this embodiment, only one of the plurality of cell sets comprises the largest number of downlink BWPs.

As one sub-embodiment of this embodiment, two of the plurality of cell sets comprise the largest number of downlink BWPs, and the target cell set is one of the two cell sets comprising the largest number of downlink BWPs in the plurality of cell sets.

As one sub-embodiment of this embodiment, multiple of the plurality of cell sets comprise the largest number of downlink BWPs, and the target cell set is one of the multiple cell sets comprising the largest number of downlink BWPs in the plurality of cell sets.

As one embodiment, each of the plurality of cell sets comprises a different number of uplink BWPs.

As one embodiment, there are two of the plurality of cell sets comprising the same number of uplink BWPs.

As one embodiment, there are multiple of the plurality of cell sets comprising the same number of uplink BWPs.

As one embodiment, the operation is sending and the target cell set is a cell set comprising the largest number of uplink BWPs in the plurality of cell sets.

As one sub-embodiment of this embodiment, only one of the plurality of cell sets comprises the largest number of uplink BWPs.

As one sub-embodiment of this embodiment, two of the plurality of cell sets comprise the largest number of uplink BWPs, and the target cell set is one of the two cell sets comprising the largest number of uplink BWPs in the plurality of cell sets.

As one sub-embodiment of this embodiment, multiple of the plurality of cell sets comprise the largest number of uplink BWPs, and the target cell set is one of the multiple cell sets comprising the largest number of uplink BWPs in the plurality of cell sets.

**Embodiment 9**

Embodiment 9 illustrates a schematic diagram showing that a value of a first field depends on an index of a first cell and a BWP-Id of a first BWP according to one embodiment of the present application, as shown in FIG. 9.

In Embodiment 9, a value of the first field of the first signaling depends on an index of the first cell and a BWP-Id of the first BWP.

As one embodiment, a BWP-Id of the first BWP is configured by a high-layer signaling.

As one embodiment, a BWP-Id of the first BWP is configured by an RRC signaling.

As one embodiment, a BWP-Id of the first BWP is configured by a ServingCellConfigCommon IE (Information Element).

As one embodiment, the first BWP is an uplink BWP and a BWP-Id of the first BWP is configured by BWP-UplinkCommon in a ServingCellConfigCommon IE.

As one embodiment, the first BWP is an uplink BWP and a BWP-Id of the first BWP is configured by BWP-UplinkDedicated in a ServingCellConfig IE.

As one embodiment, the first BWP is an uplink BWP and a BWP-Id of the first BWP is configured by BWP-Uplink in a ServingCellConfig IE.

As one embodiment, the first BWP is a downlink BWP and a BWP-Id of the first BWP is configured by BWP-DownlinkCommon in a ServingCellConfigCommon IE.

As one embodiment, the first BWP is a downlink BWP and a BWP-Id of the first BWP is configured by BWP-DownlinkDedicated in a ServingCellConfig IE.

As one embodiment, the first BWP is a downlink BWP and a BWP-Id of the first BWP is configured by BWP-Downlink in a ServingCellConfig IE.

As one embodiment, a BWP-Id of the first BWP is a non-negative integer.

As one embodiment, a BWP-Id of the first BWP is a non-negative integer not greater than 4.

As one embodiment, a value of a BWP-Id of the first BWP is 0, 1, 2, 3, or 4.

As one embodiment, when the index of the first cell remains unchanged, a value of the first field increases as a BWP-Id of the first BWP increases.

As one embodiment, when the index of the first cell remains unchanged, a value of the first field decreases as a BWP-Id of the first BWP decreases.

As one embodiment, when a BWP-Id of the first BWP remains unchanged, a value of the first field increases as the index of the first cell increases.

As one embodiment, when a BWP-Id of the first BWP remains unchanged, a value of the first field decreases as the index of the first cell decreases.

As one embodiment, a value of the first field is linearly related to the index of the first cell.

As one embodiment, a value of the first field is linearly related to a BWP-Id of the first BWP.

As one embodiment, an index of the first cell is configured by a high-layer signaling.

As one embodiment, an index of the first cell is configured by an RRC signaling.

As one embodiment, an index of the first cell is configured by IE SCellConfig.

As one embodiment, an index of the first cell is configured by IE ServCellIndex.

As one embodiment, an index of the first cell is ServCellIndex of the first cell.

As one embodiment, an index of the first cell is SCellIndex of the first cell.

As one embodiment, an index of the first cell is servCellId of the first cell.

As one embodiment, an index of the first cell is ServCellIdentity of the first cell.

As one embodiment, the operation is receiving, a value of the first field is equal to i, j represents a BWP-Id of the first BWP, P represents that a cell index in the first cell set is less than the number of downlink BWPs comprised in a cell of the index of the first cell, and i is equal to (P+j).

As one embodiment, the operation is receiving, a value of the first field is equal to i, j represents a BWP-Id of the first BWP, P represents that a cell index in the first cell set is less than the number of downlink BWPs comprised in a cell of the index of the first cell, and i is equal to (P+j-1).

As one embodiment, the operation is sending, a value of the first field is equal to i, j represents a BWP-Id of the first BWP, P represents that a cell index in the first cell set is less than the number of uplink BWPs comprised in a cell of the index of the first cell, and i is equal to (P+j).

As one embodiment, the operation is sending, a value of the first field is equal to i, j represents a BWP-Id of the first BWP, P represents that a cell index in the first cell set is less than the number of uplink BWPs comprised in a cell of the index of the first cell, and i is equal to (P+j-1).

**Embodiment 10**

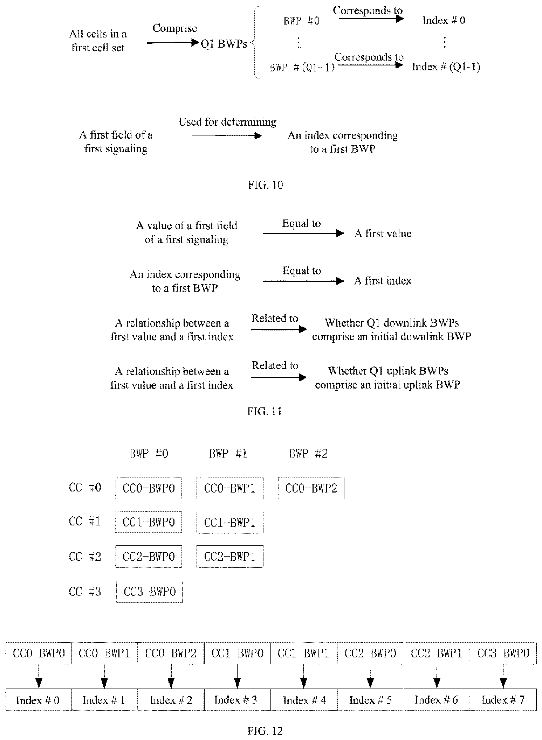

Embodiment 10 illustrates a schematic diagram of a first field being used for determining an index corresponding to a first BWP according to one embodiment of the present application, as shown in FIG. 10.

In FIG. 10, the Q1 BWPs are represented as BWP # 0, ..., and BWP # (Q1-1), respectively; and the Q1 indexes are represented as index # 0, ..., and index # (Q1-1), respectively.

In Embodiment 10, the operation is receiving, and all cells in the first cell set comprise Q1 downlink BWPs in total, the Q1 being a positive integer greater than 1, the Q1 BWPs corresponding to Q1 indexes, respectively, and the first field of the first signaling being used for determining an index corresponding to the first BWP from the Q1 indexes; or the operation is sending, and all cells in the first cell set comprise Q1 uplink BWPs in total, the Q1 being a positive integer greater than 1, the Q1 BWPs corresponding to Q1 indexes, respectively, and the first field of the first signaling being used for determining an index corresponding to the first BWP from the Q1 indexes.

As one embodiment, the Q1 indexes are 0, 1, ..., Q1-1, respectively.

As one embodiment, the Q1 indexes are 1, 2, ..., and Q1, respectively.

As one embodiment, the first field of the first signaling is used for indicating an index corresponding to the first BWP from the Q1 indexes.

**Embodiment 11**

Embodiment 11 illustrates a schematic diagram showing that a relationship between a first value and a first index is related to an initial BWP according to one embodiment of the present application, as shown in FIG. 11.

In Embodiment 11, a value of the first field of the first signaling is equal to a first value, and the index corresponding to the first BWP is equal to a first index; the operation is receiving and a relationship between the first value and the first index is related to whether the Q1 downlink BWPs comprise an initial downlink BWP, or the operation is sending and a relationship between the first value and the first index is related to whether the Q1 uplink BWPs comprise an initial uplink BWP.

As one embodiment, the first value is a non-negative number.

As one embodiment, the first value is a non-negative integer not greater than Q1.

As one embodiment, the first index is a non-negative number.

As one embodiment, the first index is a non-negative integer not greater than Q1.

As one embodiment, the Q1 downlink BWPs do not comprise an initial downlink BWP.

As one embodiment, the Q1 downlink BWPs comprise only one initial downlink BWP.

Typically, the Q1 downlink BWPs comprise an initial downlink BWP and the first value is equal to the first index; or the Q1 downlink BWPs do not comprise an initial downlink BWP and the first value is equal to the first index minus 1.

Typically, when the Q1 downlink BWPs comprise an initial downlink BWP, the Q1 BWPs comprise only one initial downlink BWP, and an index corresponding to the initial downlink BWP is equal to 0.

As one embodiment, the Q1 uplink BWPs do not comprise an initial uplink BWP.

As one embodiment, the Q1 uplink BWPs comprise only one initial uplink BWP.

Typically, the Q1 uplink BWPs comprise an initial uplink BWP and the first value is equal to the first index; or the Q1 uplink BWPs do not comprise an initial uplink BWP and the first value is equal to the first index minus 1.

Typically, when the Q1 uplink BWPs comprise an initial uplink BWP, the Q1 uplink BWPs comprise only one initial uplink BWP, and an index corresponding to the initial uplink BWP is equal to 0.

As one embodiment, the Q1 uplink BWPs comprise a plurality of initial uplink BWPs.

As one embodiment, the Q1 uplink BWPs comprise n initial uplink BWPs and the first BWP is one of the n initial uplink BWPs.

As one sub-embodiment of this embodiment, the first value is a non-negative integer not greater than n, and the first value is equal to the first index.

As one sub-embodiment of this embodiment, the first value is a non-negative integer less than n, and the first value is equal to the first index minus 1.

As one embodiment, the Q1 uplink BWPs comprise n initial uplink BWPs and the first BWP is not one of the n initial uplink BWPs.

As one sub-embodiment of this embodiment, the first value is a non-negative integer greater than or equal to n, and the first value is equal to the first index minus (n-1).

As one sub-embodiment of this embodiment, the first value is a non-negative integer greater than n, and the first value is equal to the first index minus n.

As one embodiment, the Q1 downlink BWPs comprise a plurality of initial downlink BWPs.

As one embodiment, the Q1 downlink BWPs comprise n initial downlink BWPs and the first BWP is one of the n initial downlink BWPs.

As one sub-embodiment of this embodiment, the first value is a non-negative integer not greater than n, and the first value is equal to the first index.

As one sub-embodiment of this embodiment, the first value is a non-negative integer less than n, and the first value is equal to the first index minus 1.

As one embodiment, the Q1 downlink BWPs comprise n initial downlink BWPs and the first BWP is not one of the n initial downlink BWPs.

As one sub-embodiment of this embodiment, the first value is a non-negative integer greater than or equal to n, and the first value is equal to the first index minus (n-1).

As one sub-embodiment of this embodiment, the first value is a non-negative integer greater than n, and the first value is equal to the first index minus n.

## Embodiment 12

Embodiment 12 illustrates a schematic diagram of mapping Q1 BWPs to Q1 indexes according to one embodiment of the present application, as shown in FIG. 12.

In FIG. 12, the first cell set comprises L1 cells, the L1 is equal to 4, and the L1 cells are represented as CC # 0, ..., and CC # 3, respectively; a BWP comprised in the first cell set is an uplink BWP or a downlink BWP; the cell CC # 0 comprises 3 BWPs, and the 3 BWPs are represented as CC0-BWP0, CC0-BWP1, and CC0-BWP2, respectively; the cell CC # 1 comprises 2 BWPs, and the 2 BWPs are represented as CC1-BWP0 and CC1-BWP1, respectively; the cell CC # 2 comprises 2 BWPs, and the 2 BWPs are represented as CC2-BWP0 and CC2-BWP1, respectively; the cell CC # 3 comprises 1 BWP, and the 1 BWP is represented as CC3-BWP0; and the Q1 indexes are represented as index # 0, ..., and index # (Q1-1), respectively.

In Embodiment 12, the Q1 downlink BWPs are sequentially mapped to the Q1 indexes in a manner of BWP-Id first and cell index second; or the Q1 uplink BWPs are sequentially mapped to the Q1 indexes in a manner of BWP-Id first and cell index second.

As one embodiment, the Q1 is equal to 8.

As one embodiment, a BWP comprised in the first cell set is an uplink BWP or a downlink BWP.

As one embodiment, downlink BWPs belonging to the same cell in the Q1 downlink BWPs are sequentially mapped to the corresponding number of indexes according to the corresponding BWP-Id.

As one sub-embodiment of this embodiment, downlink BWPs belonging to the same cell in the Q1 downlink BWPs are sequentially mapped to the corresponding number of indexes in an ascending order of the corresponding BWP-Id.

As one sub-embodiment of this embodiment, downlink BWPs belonging to the same cell in the Q1 downlink BWPs are sequentially mapped to the corresponding number of indexes in a descending order of the corresponding BWP-Id.

As one embodiment, indexes corresponding to downlink BWPs belonging to the same cell in the Q1 downlink BWPs are continuous.

As one embodiment, indexes corresponding to BWPs corresponding to the same BWP-Id in the Q1 downlink BWPs are discontinuous.

As one embodiment, uplink BWPs belonging to the same cell in the Q1 uplink BWPs are sequentially mapped to the corresponding number of indexes according to the corresponding BWP-Id.

As one sub-embodiment of this embodiment, uplink BWPs belonging to the same cell in the Q1 uplink BWPs are sequentially mapped to the corresponding number of indexes in an ascending order of the corresponding BWP-Id.

As one sub-embodiment of this embodiment, uplink BWPs belonging to the same cell in the Q1 uplink BWPs are sequentially mapped to the corresponding number of indexes in a descending order of the corresponding BWP-Id.

As one embodiment, indexes corresponding to uplink BWPs belonging to the same cell in the Q1 uplink BWPs are continuous.

As one embodiment, indexes corresponding to BWPs corresponding to the same BWP-Id in the Q1 uplink BWPs are discontinuous.

Typically, the first signaling is physical layer dynamic signaling, the first field of the first signaling is a BWP indicator field, and the first signaling comprises only one BWP indicator field.

## Embodiment 13

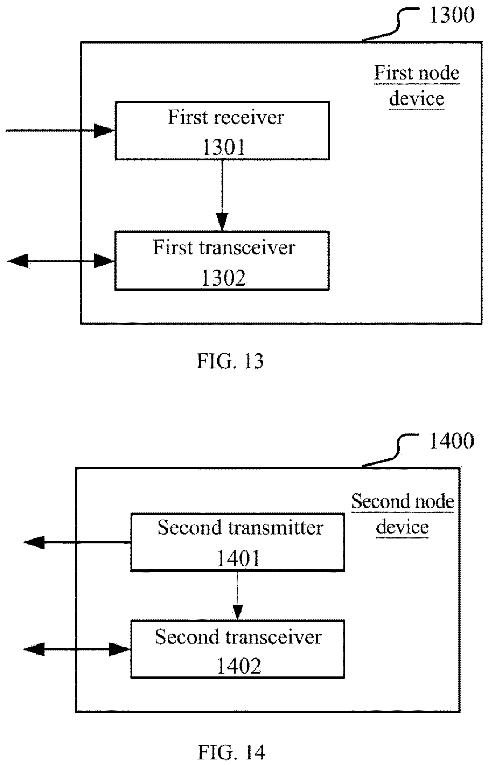

Embodiment 13 illustrates a structural block diagram of a processing apparatus used in a first node device according to one embodiment of the present application, as shown in FIG. 13. In FIG. 13, the processing device 1300 in the first node apparatus comprises a first receiver 1301 and a first transceiver 1302.

As one embodiment, the first node device is user equipment.

As one embodiment, the first node device is a relay node device.

As one embodiment, the first receiver 1301 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transceiver 1302 comprises at least one of {an antenna 452, a transmitting device 454, a transmitting processor 468, a multi-antenna transmitting processor 457, a controller/processor 459, a memory 460, and a data source 467} in Embodiment 4.

The first receiver 1301 receives a first signaling;

the first transceiver 1302, in response to receiving the first signaling, operates a first signal in a BWP of each cell in the first cell set; and
in Embodiment 13, the first signaling comprises a first field, the first signaling schedules a first cell set, and the first field of the first signaling is used for indicating a first BWP in a first cell; the BWP is the first BWP for the first cell; candidates of the first cell set comprise a plurality of cell sets, at least one of the plurality of cell sets comprises a plurality of cells, and the first cell is a cell in the first cell set; and the operation is receiving and the first BWP is a downlink BWP, or the operation is sending and the first BWP is an uplink BWP.

As one embodiment, the first field of the first signaling comprises K1 information bits; the operation is receiving and the K1 depends on the number of downlink BWPs in a target cell set, or the operation is sending and the K1 depends on the number of uplink BWPs in a target cell set; and the target cell set is one of the plurality of cell sets.

As one embodiment, the operation is receiving and the target cell set is a cell set comprising the largest number of downlink BWPs in the plurality of cell sets, or the operation is sending and the target cell set is a cell set comprising the largest number of uplink BWPs in the plurality of cell sets.

As one embodiment, a value of the first field of the first signaling depends on an index of the first cell and a BWP-Id of the first BWP.

As one embodiment, the operation is receiving, and all cells in the first cell set comprise Q1 downlink BWPs in total, the Q1 being a positive integer greater than 1, the Q1 BWPs corresponding to Q1 indexes, respectively, and the first field of the first signaling being used for determining an index corresponding to the first BWP from the Q1 indexes; or the operation is sending, and all cells in the first cell set comprise Q1 uplink BWPs in total, the Q1 being a positive integer greater than 1, the Q1 BWPs corresponding to Q1 indexes, respectively, and the first field of the first signaling being used for determining an index corresponding to the first BWP from the Q1 indexes.

As one embodiment, a value of the first field of the first signaling is equal to a first value, and the index corresponding to the first BWP is equal to a first index; and the operation is receiving and a relationship between the first value and the first index is related to whether the Q1 downlink BWPs comprise an initial downlink BWP, or the operation is sending and a relationship between the first value and the first index is related to whether the Q1 uplink BWPs comprise an initial uplink BWP.

As one embodiment, the Q1 downlink BWPs are sequentially mapped to the Q1 indexes in a manner of BWP-Id first and cell index second; or the Q1 uplink BWPs are sequentially mapped to the Q1 indexes in a manner of BWP-Id first and cell index second.

## Embodiment 14

Embodiment 14 illustrates a structural block diagram of a processing apparatus used in a second node device according to one embodiment of the present application, as shown in FIG. 14. In FIG.14, the processing apparatus 1400 in the second node device comprises a second transmitter 1401 and a second transceiver 1402.

As one embodiment, the second node device is a base station device.

As one embodiment, the second node device is user equipment.

As one embodiment, the second node device is a relay node device.

As one embodiment, the second transmitter 1401 comprises at least one of {an antenna 420, a transmitting device 418, a transmitting processor 416, a multi-antenna transmitting processor 471, a controller/processor 475, and a memory 476} in Embodiment 4.

As one embodiment, the second transceiver 1402 comprises at least one of {an antenna 420, a receiving device 418, a receiving processor 470, a multi-antenna receiving processor 472, a controller/processor 475, and a memory 476} in Embodiment 4.

The second transmitter 1401 sends a first signaling;

the second transceiver 1402, in response to sending the first signaling, executes a first signal in a BWP of each cell in the first cell set; and

in Embodiment 14, the first signaling comprises a first field, the first signaling schedules a first cell set, and the first field of the first signaling is used for indicating a first BWP in a first cell; the BWP is the first BWP for the first cell; candidates of the first cell set comprise a plurality of cell sets, at least one of the plurality of cell sets comprises a plurality of cells, and the first cell is a cell in the first cell set; and the execution is sending and the first BWP is a downlink BWP, or the execution is receiving and the first BWP is an uplink BWP.

As one embodiment, the first field of the first signaling comprises K1 information bits; the execution is receiving and the K1 depends on the number of uplink BWPs in a target cell set, or the execution is sending and the K1 depends on the number of downlink BWPs in a target cell set; and the target cell set is one of the plurality of cell sets.

As one embodiment, the execution is receiving and the target cell set is a cell set comprising the largest number of uplink BWPs in the plurality of cell sets, or the execution is sending and the target cell set is a cell set comprising the largest number of downlink BWPs in the plurality of cell sets.

As one embodiment, a value of the first field of the first signaling depends on an index of the first cell and a BWP-Id of the first BWP.

As one embodiment, the execution is receiving, and all cells in the first cell set comprise Q1 uplink BWPs in total, the Q1 being a positive integer greater than 1, the Q1 BWPs corresponding to Q1 indexes, respectively, and the first field of the first signaling being used for determining an index corresponding to the first BWP from the Q1 indexes; or the execution is sending, and all cells in the first cell set comprise Q1 downlink BWPs in total, the Q1 being a positive integer greater than 1, the Q1 BWPs corresponding to Q1 indexes, respectively, and the first field of the first signaling being used for determining an index corresponding to the first BWP from the Q1 indexes.

As one embodiment, a value of the first field of the first signaling is equal to a first value, and the index corresponding to the first BWP is equal to a first index; and the execution is receiving and a relationship between the first value and the first index is related to whether the Q1 uplink BWPs comprise an initial uplink BWP, or the execution is sending and a relationship between the first value and the first index is related to whether the Q1 downlink BWPs comprise an initial downlink BWP.

As one embodiment, the Q1 downlink BWPs are sequentially mapped to the Q1 indexes in a manner of BWP-Id first and cell index second; or the Q1 uplink BWPs are sequentially mapped to the Q1 indexes in a manner of BWP-Id first and cell index second.

Those skilled in the art can understand that all or part of the steps in the above methods may be completed by instructing the relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of software function modules. The present application is not limited to any specific form of combination of software and hardware. The user equipment, terminal and UE in the present application comprise, but are not limited to, drones, communication modules on drones, remote-controlled aircrafts, aircrafts, small aircrafts, mobile phones, tablets, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tabletsand other wireless communication devices. The base station or system device in the present application comprises, but is not limited to, macro cell base stations, micro cell base stations, Femtocells, relay base stations, gNB (NR node B), TRPs (Transmitter Receiver Points) and other wireless communication devices.

The above is only a preferred embodiment of the present application and is not intended to limit the scope of protection of the present application. Any changes and modifications made based on the embodiments described in the specification, if similar partial or complete technical effects can be obtained, shall be deemed obvious and belong to the scope of protection of the present invention.

**Claims**

1. A first node for wireless communication, comprising:

a first receiver receiving a first signaling, the first signaling comprising a first field, the first signaling scheduling a first cell set, and the first field of the first signaling being used for indicating a first BWP in a first cell; and

a first transceiver, in response to receiving the first signaling, operating a first signal in a BWP of each cell in the first cell set, the BWP being the first BWP for the first cell;

wherein candidates of the first cell set comprise a plurality of cell sets, at least one of the plurality of cell sets comprises a plurality of cells, the first cell is a cell in the first cell set, and the operation is receiving and the first BWP is a downlink BWP, or the operation is sending and the first BWP is an uplink BWP.

**2.** The first node according to claim 1, wherein the first field of the first signaling comprises K1 information bits; the operation is receiving and the K1 depends on the number of downlink BWPs in a target cell set, or the operation is sending and the K1 depends on the number of uplink BWPs in a target cell set; and the target cell set is one of the plurality of cell sets.

**3.** The first node according to claim 2, wherein the operation is receiving and the target cell set is a cell set comprising the largest number of downlink BWPs in the plurality of cell sets, or the operation is sending and the target cell set is a cell set comprising the largest number of uplink BWPs in the plurality of cell sets.

**4.** The first node according to any one of claims 1 to 3, wherein a value of the first field of the first signaling depends on an index of the first cell and a BWP-Id of the first BWP.

**5.** The first node according to any one of claims 1 to 4, wherein the operation is receiving, and all cells in the first cell set comprise Q1 downlink BWPs in total, the Q1 being a positive integer greater than 1, the Q1 BWPs corresponding to Q1 indexes, respectively, and the first field of the first signaling being used for determining an index corresponding to the first BWP from the Q1 indexes, or the operation is sending, and all cells in the first cell set comprise Q1 uplink BWPs in total, the Q1 being a positive integer greater than 1, the Q1 BWPs corresponding to Q1 indexes, respectively, and the first field of the first signaling being used for determining an index corresponding to the first BWP from the Q1 indexes.

**6.** The first node according to claim 5, wherein the value of the first field of the first signaling is equal to a first value, and the index corresponding to the first BWP is equal to a first index; and the operation is receiving and a relationship between the first value and the first index is related to whether an initial downlink BWP is comprised in the Q1 downlink BWPs, or the operation is sending and a relationship between the first value and the first index is related to whether an initial uplink BWP is comprised in the Q1 uplink BWPs.

**7.** The first node according to claim 5 or 6, wherein the Q1 downlink BWPs are sequentially mapped to the Q1 indexes in a manner of BWP-Id first and cell index second, or the Q1 uplink BWPs are sequentially mapped to the Q1 indexes in a manner of BWP-Id first and cell index second.

**8.** A second node for wireless communication, comprising:

a second transmitter, sending first signaling, the first signaling comprising a first field, the first signaling scheduling a first cell set, and the first field of the first signaling being used for indicating a first BWP in a first cell; and a second transceiver, in response to sending the first signaling, executing a first signal in a BWP of each cell in the first cell set, the BWP being the first BWP for the first cell; wherein candidates of the first cell set comprise a plurality of cell sets, at least one of the plurality of cell sets comprises a plurality of cells, the first cell is a cell in the first cell set, and the execution is sending and the first BWP is a downlink BWP, or the execution is receiving and the first BWP is an uplink BWP.

**9.** A method in a first node for wireless communication, comprising:

receiving a first signaling, the first signaling comprising a first field, the first signaling scheduling a first cell set, and the first field of the first signaling being used for indicating a first BWP in a first cell; and in response to receiving the first signaling, operating a first signal in a BWP of each cell in the first cell set, the BWP being the first BWP for the first cell; wherein candidates of the first cell set comprise a plurality of cell sets, at least one of the plurality of cell sets comprises a plurality of cells, the first cell is a cell in the first cell set, and the operation is receiving and the first BWP is a downlink BWP, or the operation is sending and the first BWP is an uplink BWP.

**10.** A method in a second node for wireless communication, comprising:

sending first signaling, the first signaling comprising a first field, the first signaling scheduling a first cell set, and the first field of the first signaling being used for indicating a first BWP in a first cell; and in response to sending the first signaling, executing a first signal in a BWP of each cell in the first cell set, the BWP being the first BWP for the first cell; wherein candidates of the first cell set comprise a plurality of cell sets, at least one of the plurality of cell sets comprises a plurality of cells, the first cell is a cell in the first cell set, and the execution is sending and the first BWP is a downlink BWP, or the execution is receiving and the first BWP is an uplink BWP.

100

First node

101
Receive first signaling

102
In response to receiving the first signaling, operate a
first signal in a BWP of each cell in a first cell set

FIG. 1

5GS/EPS 200

220
HSS/UDM

NG-RAN
202

211
MME/AMF/
SMF

214
Other
MME/AMF/
SMF

201
UE

203
NR node B

230
Internet
Service

241
UE

204
Other NR
node B

212
S-GW/UPF

213
P-GW/UPF

5GC/EPC
210

FIG. 2

Control plane
300

L3

306
RRC

305

L2

304
PDCP

303
RLC

302
MAC

L1

301
PHY

User plane
350

356
SDAP

355

L2

354
PDCP

353
RLC

352
MAC

L1

351
PHY

FIG. 3

FIG. 4

FIG. 5

| N4. Second node | | U3. First node |

| S40. Send a first signaling |

First signaling ⟶

| S30. Receive a first signaling |

| S31. In response to receiving a first signaling, send a first signal in an uplink BWP of each cell in a first cell set |

⟵ First signal

| S41. In response to sending a first signaling, receive a first signal in an uplink BWP of each cell in a first cell set |

( End )                    ( End )

FIG. 6

The operation is receiving and K1  $\xrightarrow{\text{Depends on}}$  The number of downlink BWPs in a target cell set

The operation is sending and K1  $\xrightarrow{\text{Depends on}}$  The number of uplink BWPs in a target cell set

FIG. 7

Target cell set  $\xrightarrow{\text{Yes}}$  A cell set comprising the largest number of BWPs in the plurality of cell sets

FIG. 8

A value of a first field  $\xrightarrow{\text{Depends on}}$  An index of a first cell

A value of a first field  $\xrightarrow{\text{Depends on}}$  A BWP-Id of a first BWP

FIG. 9

All cells in a first cell set →(Comprise)→ Q1 BWPs

BWP #0 →(Corresponds to)→ Index # 0

⋮

BWP #(Q1-1) →(Corresponds to)→ Index # (Q1-1)

A first field of a first signaling →(Used for determining)→ An index corresponding to a first BWP

FIG. 10

A value of a first field of a first signaling →(Equal to)→ A first value

An index corresponding to a first BWP →(Equal to)→ A first index

A relationship between a first value and a first index →(Related to)→ Whether Q1 downlink BWPs comprise an initial downlink BWP

A relationship between a first value and a first index →(Related to)→ Whether Q1 uplink BWPs comprise an initial uplink BWP

FIG. 11

|  | BWP #0 | BWP #1 | BWP #2 |
|---|---|---|---|
| CC #0 | CC0-BWP0 | CC0-BWP1 | CC0-BWP2 |
| CC #1 | CC1-BWP0 | CC1-BWP1 | |
| CC #2 | CC2-BWP0 | CC2-BWP1 | |
| CC #3 | CC3 BWP0 | | |

| CC0-BWP0 | CC0-BWP1 | CC0-BWP2 | CC1-BWP0 | CC1-BWP1 | CC2-BWP0 | CC2-BWP1 | CC3-BWP0 |
|---|---|---|---|---|---|---|---|
| Index # 0 | Index # 1 | Index # 2 | Index # 3 | Index # 4 | Index # 5 | Index # 6 | Index # 7 |

FIG. 12

1300

First node
device

First receiver
1301

First transceiver
1302

FIG. 13

1400

Second node
device

Second transmitter
1401

Second transceiver
1402

FIG. 14

## INTERNATIONAL SEARCH REPORT

| International application No. |
|---|
| **PCT/CN2023/119783** |

**A.    CLASSIFICATION OF SUBJECT MATTER**

H04L 5/00(2006.01)i

According to International Patent Classification (IPC) or to both national classification and IPC

**B.    FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 多小区, 调度, 下行控制信息, 带宽部分, 索引, 映射, 集合, multi-cell, schedule, DCI, BWP, bandwidth part, index, mapping, sets

**C.    DOCUMENTS CONSIDERED TO BE RELEVANT**

| Category* | Citation of document, with indication, where appropriate, of the relevant passages | Relevant to claim No. |
|---|---|---|
| X | ZTE. "Discussion on Multi-cell PUSCH/PDSCH Scheduling with a Single DCI" *3GPP TSG RAN WG1 Meeting #110, R1-2205962,* 12 August 2022 (2022-08-12), section 4 | 1-10 |
| A | CN 105991269 A (SHANGHAI LANGBO COMMUNICATION TECHNOLOGY CO., LTD.) 05 October 2016 (2016-10-05) entire document | 1-10 |
| A | CN 113498181 A (SHANGHAI LANGBO COMMUNICATION TECHNOLOGY CO., LTD.) 12 October 2021 (2021-10-12) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 November 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119783**

| Patent document cited in search report | | | Publication date (day/month/year) | Patent family member(s) | Publication date (day/month/year) |
|---|---|---|---|---|---|
| CN | 105991269 | A | 05 October 2016 | None | |
| CN | 113498181 | A | 12 October 2021 | None | |

Form PCT/ISA/210 (patent family annex) (July 2022)